# EUROPEAN PATENT APPLICATION

(11) **EP 4 825 694 A1**
(43) Date of publication of application: **21.10.2026**
(21) Application number: 25759574.4
(22) Date of filing: 27.02.2025
(51) Int. Cl.: B60W 60/00

(54) **VEHICLE CONTROL METHOD, VEHICLE CONTROL APPARATUS, COMPUTER DEVICE, STORAGE MEDIUM, PROGRAM PRODUCT, AND VEHICLE**

(71) Applicant: SZ Zhuoyu Technology Co., Ltd., Shenzhen, Guangdong 518055 (CN)
(72) Inventor: WU, Brandon, Shenzhen, Guangdong 518055 (CN); YAN, Paul, Shenzhen, Guangdong 518055 (CN); SUN, Leon, Shenzhen, Guangdong 518055 (CN); LIU, Sikang, Shenzhen, Guangdong 518055 (CN)
(74) Representative: Botti & Ferrari S.p.A.
(86) International application number: PCT/CN2025/079657
(87) International publication number: WO 2026/178808

(57) **Abstract**

The present application discloses a method of controlling a vehicle passing through an intersection, a vehicle control device, a computer device, a storage medium, a program product, and a vehicle. The method of controlling the vehicle comprises: automatically controlling vehicle braking based on a stop line at the intersection detected by a vehicle sensing device; determining whether a shared autonomy preset condition is satisfied, and initiating a man-machine shared autonomy mode in response to a driver operation of controlling vehicle driving if the shared autonomy preset condition is satisfied; determining whether a non-shared autonomy preset condition is satisfied, and exiting the man-machine shared autonomy mode when the non-shared autonomy preset condition is satisfied. The method of controlling the vehicle of the present application can adjust the vehicle driving in response to driver operations without exiting an intelligent driving mode during the process of assisted driving or automatic driving, thereby realizing more accurate driving control of the vehicle at the intersection.

## Description

### FIELD

The present application relates to the field of assisted driving and, in particular, to a method of controlling a vehicle passing through an intersection, a vehicle control device, a computer device, a storage media, a program product and a vehicle.

### BACKGROUND

Currently, key features in the advanced assisted driving industry include urban navigation assisted driving and urban memory driving functions. Among these, handling traffic light intersections is one of the unique challenges in urban driving scenarios. In particular, response to static intersection elements (stop lines, boundaries of waiting areas for turning, pedestrian crossings, and yield signs) serves as the safety foundation for navigating intersections.

Related technologies rely on the static elements, such as stop lines and boundaries of waiting areas for turning, provided by high-definition maps or online detected by vehicle sensing devices. However, due to the limited coverage and low update frequency of high-definition maps, mainstream urban pilot assisted driving manufacturers typically adopt online detection solutions that do not depend on high-definition maps. Nevertheless, in a driver assistance system where the vehicle sensing device is based on the pure vision, the static elements cannot be accurately and robustly detected due to limitations such as the field of view of a sensor, the lens distortion, the clarity of road sings, and the lighting conditions. As a result, the driving of a vehicle cannot be automatically and precisely controlled at intersections based on accurately identified static elements such as stop lines at intersections.

### SUMMARY

Embodiments of the present application provide a vehicle control method, a vehicle control device, a computer device, a storage medium, a program product, and a vehicle for solving at least one of the above technical problems.

In a first aspect, embodiments of the present application provide a method of controlling a vehicle passing through an intersection, comprising:
automatically controlling vehicle braking based on a stop line at the intersection detected by a vehicle sensing device;
determining whether a shared autonomy preset condition is satisfied, and initiating a man-machine shared autonomy mode in response to a driver operation of controlling vehicle driving if the shared autonomy preset condition is satisfied; and
determining whether a non-shared autonomy preset condition is satisfied, and exiting the man-machine shared autonomy mode if the non-shared autonomy preset condition is satisfied.

In some embodiments, the shared autonomy preset condition comprises: simultaneously satisfying the following: the vehicle is located within a preset range of the intersection, a traffic light corresponding to a lane in which the vehicle is located is red, a current vehicle speed is less than a preset speed threshold, and a longitudinal override trigger signal is received.

In some embodiments, the non-shared autonomy preset condition comprises: satisfying at least one of the following: the vehicle is not located within a preset range of the intersection, a traffic light corresponding to a lane in which the vehicle is located is not red, a current vehicle speed is greater than a preset speed threshold, and the vehicle is in a manual driving state.

In some embodiments, the initiating a man-machine shared autonomy mode in response to a driver operation of controlling vehicle driving if the shared autonomy preset condition is satisfied comprises:
initiating the man-machine shared autonomy mode if the shared autonomy preset condition is satisfied;
controlling a vehicle speed in response to a driver operation of controlling an accelerator pedal, while automatically controlling a direction of the vehicle based on a travel trajectory planned through automatic driving.

In some embodiments, the controlling a vehicle speed in response to a driver operation of controlling an accelerator pedal comprises: controlling the vehicle to accelerate or maintain a constant speed in response to a driver operation of depressing the accelerator pedal, and controlling the vehicle braking at a preset deceleration in response to a driver operation of releasing the accelerator pedal.

In some embodiments, the determining whether a shared autonomy preset condition is satisfied or the determining whether a non-shared autonomy preset condition is satisfied comprises following steps of determining whether the vehicle is located within the preset range of the intersection:
when the vehicle has passed a stop line at an entrance of the intersection, determining whether a ratio of a distance traveled by the vehicle within the intersection to a total length of the intersection is less than a first threshold;
if the ratio is less than the first threshold, it is determined that the vehicle is located within the preset range of the intersection; if the ratio is equal to or greater than the first threshold, it is determined that the vehicle is not located within the preset range of the intersection;
when the vehicle has not passed the stop line at the entrance of the intersection, determining whether the distance from the vehicle to the stop line at the entrance of the intersection is less than a second threshold;
if the distance is less than the second threshold, it is determined that the vehicle is located within the preset range of the intersection; if the distance is equal to or greater than the second threshold, it is determined that the vehicle is not located within the preset range of the intersection.

In some embodiments, a man-machine shared autonomy trigger state machine is pre-configured to include a man-machine shared autonomy enable state and a man-machine shared autonomy disable state;
the man-machine shared autonomy trigger state machine is controlled to switch to the man-machine shared autonomy enable state when the shared autonomy preset condition is satisfied;
the man-machine shared autonomy trigger state machine is controlled to switch to the man-machine shared autonomy disable state when the non-shared autonomy preset condition is satisfied.

In some embodiment, the stop line at the intersection comprises a stop line at an entrance of the intersection and a stop line of a waiting area for turning within the intersection.

In a second aspect, embodiments of the present application provide a computer device comprising a memory, a processor and a computer program stored in the memory, and the processor executes the computer program to implement steps of the method of controlling the vehicle of any one of the embodiments of the present application.

In a third aspect, embodiments of the present application provide a computer-readable storage medium storing a computer program or instruction therein, and the computer program or instruction, when executed by a processor, implements steps of the method of controlling the vehicle of any one of the embodiments of the present application.

In a fourth aspect, embodiments of the present application provide a computer program product comprising a computer program or instruction, and the computer program or instruction, when executed by a processor, implements steps of the method of controlling the vehicle of any one of the embodiments of the present application.

In a fifth aspect, embodiments of the present application provide a vehicle configured with the computer device of any one of the embodiments of the present application.

In a sixth aspect, embodiments of the present application provide a device for controlling a vehicle passing through an intersection, comprising: a braking control module for automatically controlling vehicle braking based on a stop line at the intersection detected by a vehicle sensing device; a shared autonomy module for determining whether a shared autonomy preset condition is satisfied, and initiating a man-machine shared autonomy mode in response to a driver operation of controlling vehicle driving if the shared autonomy preset condition is satisfied; the shared autonomy module is further configured to determine whether a non-shared autonomy preset condition is satisfied, and to exit the man-machine shared autonomy mode if the non-shared autonomy preset condition is satisfied.

The method of controlling the vehicle of the present application can adjust the vehicle driving in response to driver operations without exiting an intelligent driving mode (for example, an automatic driving mode or an assisted driving mode) during the process of assisted driving or automatic driving, thereby realizing more accurate driving control of the vehicle at the intersection.

### BRIEF DESCRIPTION OF THE DRAWINGS

In order to more clearly illustrate the technical solutions of the embodiments of the present application, the drawings used in the description of the embodiments will be briefly described below. The drawings in the following description are some of the embodiments of the present application. One of ordinary skill in the art may obtain other drawings based on these drawings without creative labor.
FIG. 1 is a flowchart of an embodiment of a vehicle control method of the present application;
FIG. 2 is a flowchart of another embodiment of a vehicle control method of the present application;
FIG. 3 is a flowchart of a further embodiment of a vehicle control method of the present application;
FIG. 4 is a schematic diagram of an embodiment of a man-machine shared autonomy trigger state machine of the present application;
FIG. 5 is a schematic diagram of an embodiment of a vehicle located in an intersection of the present application;
FIG. 6 is a structural schematic diagram of an embodiment of a computer device of the present application.

### DETAILED DESCRIPTION

In order to make the purpose, technical solutions and advantages of the embodiments of the present application clearer, the technical solutions in the embodiments of the present application will be described clearly and completely in the following in conjunction with the drawings in the embodiments of the present application. Obviously, the described embodiments are part and not all of the embodiments of the present application. Based on the embodiments in the present application, all other embodiments obtained by a person of ordinary skill in the art without the need for creative labor fall within the scope of protection of the present application. It is to be noted that the embodiments and the features in the embodiments in the present application may be combined with each other without conflict.

It should also be noted that, in the present application, the terms "include" and "comprise" not only encompass the listed elements but also include other elements not explicitly listed, as well as elements that are inherent to such processes, methods, articles, or devices. Unless otherwise specified, an element defined by the phrase "comprises..." does not exclude the presence of additional identical elements in the process, method, article, or device that comprises the stated element.

The present application provides a vehicle control method, which may be implemented as a method for man-machine shared autonomy at a traffic light intersection. It can be used in an advanced driver assistance system or an automatic driving system of a vehicle, for example, installed in the vehicle's controller (such as an intelligent driving controller) in the form of software or firmware. The method enables the vehicle to stop at a target position in complex road elements correctly, such as at a stop line or within a waiting area for turning at the intersection, through the collaboration between a driver and the assisted or automatic driving algorithm. At the same time, it allows the driver to correct a situation where the assisted driving algorithm fails to stop the vehicle at the desired position before the stop line, without exiting the assisted driving mode or automatic driving mode. When approaching a traffic light intersection, the driver determines whether the vehicle has stopped correctly at the desired position before the stop line, or whether it is necessary to stop within the waiting area for turning. If adjustment is needed, the driver may gently depress an accelerator pedal. Upon detecting that the accelerator pedal is depressed, the vehicle controller will cause the vehicle to move forward for a short distance and then brake comfortably, thereby allowing the driver to adjust the stopping position.

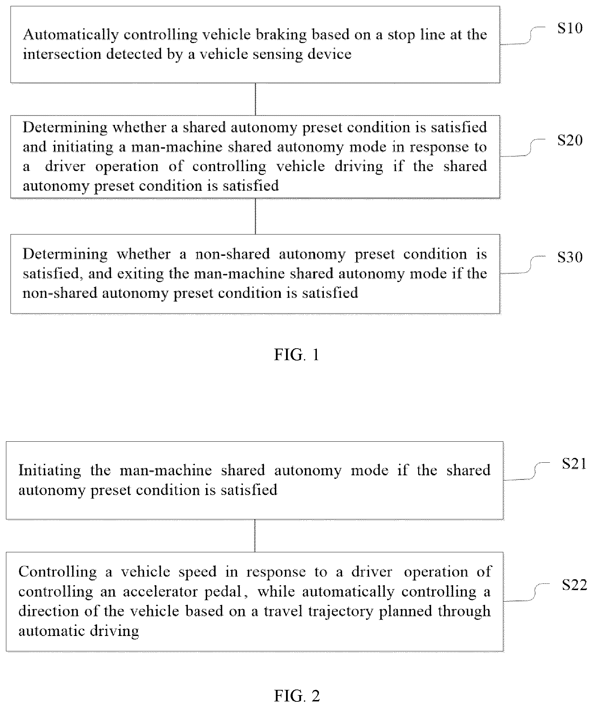

FIG. 1 is a flow diagram of an embodiment of a vehicle control method of the present application. The following steps are included in this embodiment.

S10: Vehicle braking is automatically controlled based on a stop line at the intersection detected by a vehicle sensing device. The stop line at the intersection includes a stop line at an entrance of the intersection and a stop line of a waiting area for turning within the intersection. Exemplarily, the traveling vehicle is automatically controlled to slow down or stop when a stop line at the intersection has been detected.

By way of example, the vehicle sensing device includes, but is not limited to, a monocular camera, a binocular camera, a trinocular camera, a fisheye camera, a radar, a lidar and vision sensor fusion system (an integrated assembly comprising a lidar and a monocular camera, or a lidar and a binocular camera, or a lidar and a multi-camera), and a positioning device, etc.

The controller of the vehicle may capture an image of the intersection in front of the vehicle by one or more of the monocular camera, the binocular camera, the trinocular camera, the fisheye camera, the radar, and the lidar and vision sensor fusion system, and apply image recognition algorithms to identify static elements in the intersection image, such as a stop line at an entrance of the intersection, lane lines, pedestrian crossings, driving signs (e.g., straight-ahead, left-turn, right-turn signs), traffic signals, a waiting area for turning, boundary lines of the waiting area for turning, and a stop line of the waiting area for turning.

In some embodiments, the controller of the vehicle calculates a distance from the current vehicle to the stop line based on the captured image of the intersection and the stop line identified from the image of the intersection (e.g., the distance from the current vehicle to the stop line is calculated using depth information obtained from the image captured by the binocular camera; the specific algorithm is not limited in the present application). Then, in the case of detecting a red light, the vehicle controller then combines a current speed of the vehicle to automatically control the vehicle braking. For example, the vehicle is controlled to stop at a preset distance, 1 meter for example, before the stop line at the entrance of the intersection. The vehicle may maintain a certain distance from the pedestrian crossings after the stop line to avoid occupying the pedestrian crossings, which obstructs pedestrians from crossing the pedestrian crossings.

In some embodiments, the controller of the vehicle identifies, based on the captured intersection image, that the vehicle is in a left-turn lane, and a left-turn signal is red while a straight-ahead signal is green. It then automatically controls the vehicle to drive into a left-turn waiting area and stop at a preset distance, 1 meter for example, before the stop line of the waiting area, thus maintaining a safe distance from vehicles coming straight in an opposite direction to ensure driving safety.

However, as mentioned in the background art, due to limitations such as the field of view of the sensor, the lens distortion, the clarity of road signs, and the lighting conditions, the distance between the current vehicle and the stop line calculated in the above embodiment may contain errors. As a result, the vehicle may fail to stop precisely at the preset distance through automatic control. Thus, a man-machine shared autonomy mode is proposed in subsequent steps of the present embodiment to allow the driver to participate in controlling the traveling of the vehicle at the intersection.

S20: It is determined whether a shared autonomy preset condition is satisfied, and a man-machine shared autonomy mode is initiated in response to a driver operation of controlling vehicle driving if the shared autonomy preset condition is satisfied. In the man-machine shared autonomy mode, the driver may participate in the control of the vehicle without exiting the current intelligent driving mode (e.g., automatic driving mode or assisted driving mode).

Exemplarily, the shared autonomy preset condition includes: simultaneously satisfying that the vehicle is located within a preset range of the intersection, a traffic light corresponding to a lane in which the vehicle is located is red, a current vehicle speed is less than a preset speed threshold, and a longitudinal override trigger signal is received (e.g., it may be a longitudinal override falling edge or rising edge, etc., and the present application is not limit thereto). Exemplarily, the driver operation may be an acceleration operation. In response to the driver's acceleration operation, the vehicle is controlled to move forward or turn left or turn right, etc. In some embodiments, the shared autonomy preset condition further includes: satisfying that the current mode is an automatic driving mode or an assisted driving mode, or the vehicle state is a lateral override state.

The timing at which a driver operation is detected may be after the vehicle has come stopped, or during the deceleration process of the vehicle. That is, the driver may realize after the vehicle has stopped that it has not stopped at a desired position, and thus control the vehicle to continue moving forward through the driver operation. Optionally, during the deceleration process of the vehicle, the driver may, based on experience, estimate that the vehicle will not be able to stop at the desired position, or may wish to stop at the desired position more quickly, and therefore control the vehicle to move forward through the driver operation (e.g., by depressing the accelerator pedal or electric accelerator pedal to control the vehicle to maintain or increase the vehicle speed so as to stop at the desired position). Exemplarily, when the vehicle is controlled to move forward through driver operation during deceleration, it is required that the current vehicle speed is less than a set threshold. This threshold may be determined through calibration testing, and may, for example, be calibrated as 5km/h.

S30: It is determined whether a non-shared autonomy preset condition is satisfied, and exits the man-machine shared autonomy mode if the non-shared autonomy preset condition is satisfied.

Exemplarily, the non-shared autonomy preset condition comprises satisfying at least one of the following: the vehicle is not located within a preset range of the intersection, a traffic light corresponding to a lane in which the vehicle is located is not red, a current vehicle speed is greater than a preset speed threshold, and the vehicle is in a manual driving state.

The method of controlling the vehicle of the present application can adjust the vehicle driving in response to driver operations without exiting the intelligent driving mode (e.g., the automatic driving mode or the assisted driving mode) during the process of assisted driving or automatic driving, thereby realizing more accurate driving control of the vehicle at the intersection.

FIG. 2 is a flow diagram of another embodiment of a vehicle control method of the present application. In this embodiment, if the shared autonomy preset condition is satisfied, a man-machine shared autonomy mode is initiated in response to a driver operation of controlling vehicle driving, which includes the followings.

S21: The man-machine shared autonomy mode is initiated if the shared autonomy preset condition is satisfied. In the man-machine shared autonomy mode, the driver may participate in the control of the vehicle without exiting the current automatic driving mode or assisted driving mode.

S22: A vehicle speed is controlled in response to a driver operation of controlling an accelerator pedal, while a direction of the vehicle is automatically controlled based on a travel trajectory planned through automatic driving. The accelerator pedal may be an electric accelerator pedal.

Exemplarily, if the vehicle is in a straight lane, the direction of the vehicle is automatically kept unchanged according to the travel trajectory planned by the automatic driving mode or the assisted driving mode, and the vehicle is controlled to accelerate forward or decelerate forward, or maintain a constant speed and then decelerate forward according to the driver operation of controlling the accelerator pedal. If the vehicle is in the left turn lane, the direction of the vehicle can be automatically controlled according to the travel trajectory planned by the automatic driving mode or the assisted driving mode to enter the waiting area for turning, and the vehicle can be controlled to accelerate forward or decelerate forward, or maintain constant speed and then decelerate forward according to the driver operation of controlling the accelerator pedal.

In some embodiments, the vehicle control method of the present application further includes controlling the driving direction of the vehicle in response to a driver operation of controlling the direction (e.g., when a lateral override occurs, i.e., when the driver actively operates a steering wheel, the automatic driving system or the assisted driving system will immediately cease the lateral control of the vehicle and transfer the control authority to the driver). In this embodiment, the driver can actively intervene the vehicle driving when realizing that the vehicle is not traveling in the expected direction, thereby enabling separate control of the lateral and longitudinal movements of the vehicle by the driver, and allowing the vehicle to stop more precisely at the desired position.

In this embodiment, in the man-machine shared autonomy mode, when the vehicle passes through the intersection, the vehicle speed can be controlled in response to the driver operation of controlling the accelerator pedal, whereas the vehicle direction remains under automatic control based on the travel trajectory planned by the assisted driving mode or the automatic driving mode. Thus, driver can participate in the vehicle control as needed, without the need to exit the self-driving system or assisted driving system, thus facilitating the driver to carry out fine control of the vehicle when passing through the intersection area, and realizing that the vehicle accurately stops at the driver's desired position.

In some embodiments, the controlling a vehicle speed in response to a driver operation of controlling an accelerator pedal includes: controlling the vehicle to accelerate or maintain a constant speed in response to a driver operation of depressing the accelerator pedal, and controlling the vehicle braking at a preset deceleration in response to a driver operation of releasing the accelerator pedal. The preset deceleration may be set as needed (e.g., calibrated based on driver comfort perception to avoid sudden braking that could negatively impact the driver's experience) to achieve a purpose of controlling the vehicle to stop comfortably.

Exemplarily, the vehicle has stopped but not at a position desired by the driver. At this point, the vehicle speed is controlled to accelerate from zero and continue moving forward in response to the driver operation of depressing the accelerator pedal. After traveling a certain distance, the driver may release the accelerator pedal, and then the controller of the vehicle controls the vehicle to decelerate to a stop at a preset deceleration. In this case, the distance the vehicle travels before coming to a complete stop is determined by an initial speed of the vehicle and the preset deceleration. By limiting the maximum allowable speed for this function and selecting an appropriate deceleration, the stopping distance can be kept within a small range, enabling the driver to perform fine, repeated position adjustments until the vehicle stops at the desired position. Exemplarily, the maximum speed may be set to 30km/h. This maximum speed may be based on the analysis of starting speeds of multiple drivers and the typical steady-state speed in urban driving; 30 km/h is considered a speed at which the driver intends to start and proceed steadily. A suitable deceleration may be determined based on feedback from test drivers regarding comfort levels, and may also be adjusted according to customer feedback. In other words, steps S21-S22 may be executed repeatedly.

In some embodiments, if the controller of the vehicle detects the driver operation of depressing the accelerator pedal again while controlling the deceleration of the vehicle at the preset deceleration (e.g., if the driver empirically predicts that the vehicle will not be able to stop at the desired position in the current situation, the driver depresses the accelerator pedal again), the vehicle is again accelerated accordingly, or the vehicle maintains the constant speed. After a certain distance, the driver releases the accelerator pedal again, and the controller of the vehicle decelerates the vehicle to a stop at a preset deceleration. The above process can be repeated, so that the driver can depress or release the accelerator pedal several times to control the vehicle to stop more accurately at the desired position.

The vehicle control method provided by the present application completes the driving response to elements such as the stop line and the waiting area for turning at a traffic light intersection based on man-machine cooperation. When a vehicle equipped with the method of the present application needs to respond to a red light signal and stop in front of a stop line, the vehicle decelerates according to the distance to the stop line detected online and stops at a specified position in front of the stop line.
1. If the vehicle fails to stop at the position expected by the driver due to significant error in the detected stop line distance, the driver can gently depress the accelerator pedal to perform a longitudinal override (entering a driver control mode), and then release it to trigger the man-machine shared autonomy mode. At this point, the assisted driving system maintains normal control of the direction, and the longitudinal movement is stopped with a fixed and comfortable deceleration at a speed after the driver release the pedal.
2. If the driver determines that the vehicle needs to stop within the waiting area for turning, the driver may also gently depress the accelerator pedal once or multiple times to trigger the man-machine shared autonomy mode, until the vehicle is comfortably braked to the desired position in the waiting area for turning.

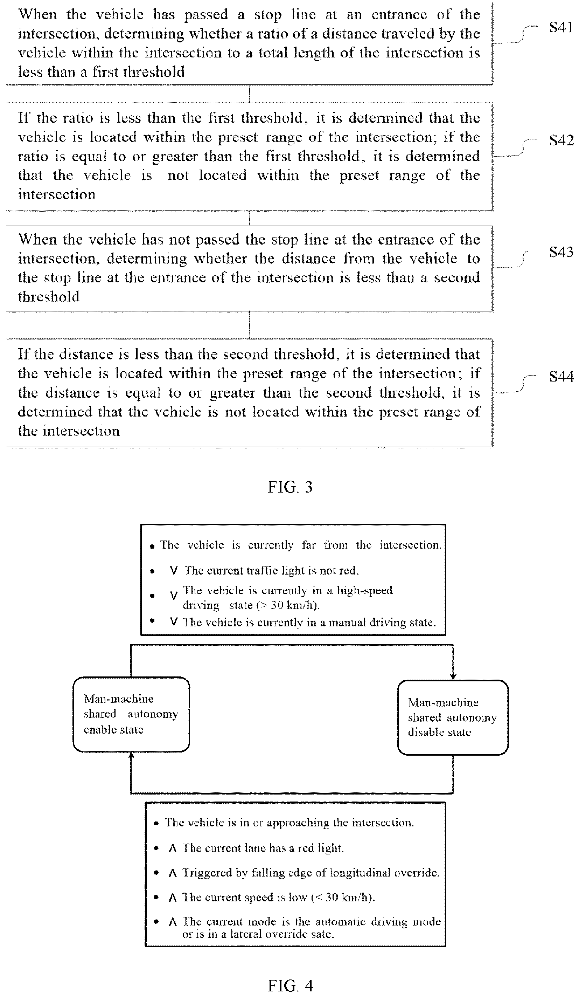

FIG. 3 shows a flow diagram of a further embodiment of the vehicle control method of the present application. In this embodiment, the determining whether a shared autonomy preset condition is satisfied or the determining whether a non-shared autonomy preset condition is satisfied includes the following steps of determining whether the vehicle is located within the preset range of the intersection, which include:
S41: when the vehicle has passed a stop line at an entrance of the intersection, determining whether a ratio of a distance traveled by the vehicle within the intersection to a total length of the intersection is less than a first threshold;
S42: if the ratio is less than the first threshold, it is determined that the vehicle is located within the preset range of the intersection; if the ratio is equal to or greater than the first threshold, it is determined that the vehicle is not located within the preset range of the intersection;
S43: when the vehicle has not passed the stop line at the entrance of the intersection, determining whether the distance from the vehicle to the stop line at the entrance of the intersection is less than a second threshold;
S44: if the distance is less than the second threshold, it is determined that the vehicle is located within the preset range of the intersection; if the distance is equal to or greater than the second threshold, it is determined that the vehicle is not located within the preset range of the intersection.

In some embodiments, the vehicle control method of the present application further includes preconfiguring a man-machine shared autonomy trigger state machine, including a man-machine shared autonomy enable state and a man-machine shared autonomy disable state; controlling the man-machine shared autonomy trigger state machine to switch to the man-machine shared autonomy enable state when the shared autonomy preset condition is satisfied; and controlling the man-machine shared autonomy trigger state machine to switch to the man-machine shared autonomy disable state when the non-shared autonomy preset condition is satisfied.

The vehicle control method of the present application is pre-set with a man-machine shared autonomy trigger state machine for entering and exiting the man-machine shared autonomy mode, and a design principle is to ensure that the man-machine shared autonomy function can be correctly triggered and exited based on the driver inputs, host vehicle state and environment state. According to the functional requirements, a two-state finite state machine is designed to describe the condition judgment for man-machine shared autonomy, including the man-machine shared autonomy enable state and the man-machine shared autonomy disable state. A schematic diagram of an embodiment of the man-machine shared autonomy trigger state machine of the present application is shown in FIG. 4. As shown in FIG. 4, the state transition conditions between the two states are as follows.
1. Man-machine shared autonomy disable state → man-machine shared autonomy enable state. The vehicle control method of the present application aims to allow the driver to depress and then release the accelerator pedal when approaching or within an intersection, and then let the assisted driving algorithm (or automatic driving algorithm) control the vehicle to move forward and come to a comfortable stop. In order to correctly trigger this function and avoid false triggering, all of the following conditions need to be met to enter the man-machine shared autonomy mode:
   1.1) The vehicle is currently within or approaching the intersection.

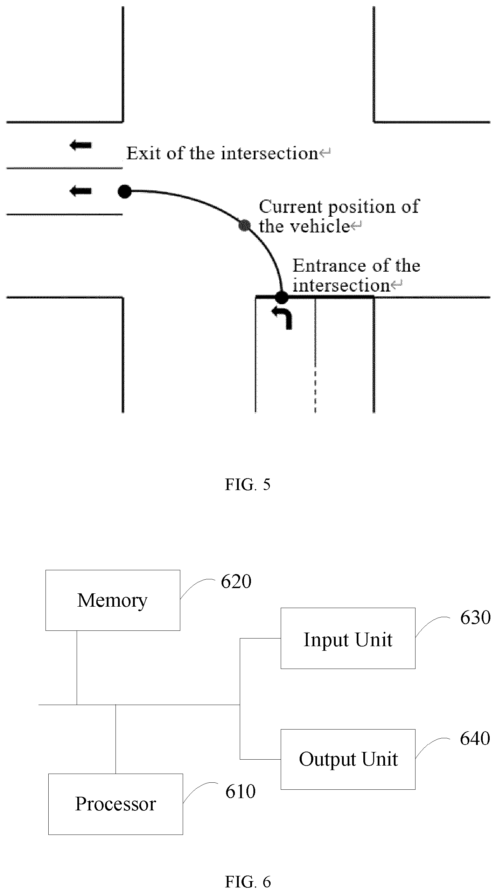

For example, being within the intersection may mean the vehicle has passed the stop line at the intersection and the distance traveled within the intersection does not exceed a certain proportion t (e.g., the proportion t is a first threshold, preferably from 0.5 to 0.6) of the total length of the intersection (i.e., the distance from the entrance to the exit of the intersection). For a left-turn lane, the distance traveled within the intersection and the total length of the intersection can be referred to FIG. 5, where the curve distance along a centerline (e.g., the travel trajectory planned through the assisted driving algorithm) from the entrance of the intersection to the current vehicle position is d_{cum}, and the curve distance from the entrance to the exit of the intersection is d_{intersection}. Then, r_{intersection} = d_{cum}/d_{intersection}. If r_{intersection} is less than or equal to t, the vehicle is considered to be within the intersection; otherwise, the vehicle is not within the intersection. The same logic applies to right-turn and straight lanes.

Approaching the intersection is defined as the vehicle not yet entering the intersection and the distance to the stop line being less than a threshold dₜₕᵣₑₛ (second threshold), the threshold dₜₕᵣₑₛ being preferably 10 meters.

The condition for being within the intersection considers whether the host vehicle has left the left-turn waiting area. Using the ratio r_{intersection} in the determination improves applicability to intersections of different sizes. The threshold t is derived from statistical analysis of intersections nationwide and driver fine-tuning during testing, balancing regional diversity of waiting areas and subjective perception of drivers.

1.2) The current lane has a red light. Only when the current lane has a red light does the host vehicle need to respond to stop at the stop line or stop within the waiting area for turning.

1.3) The vehicle detects a falling edge of longitudinal override. This action is an interface for interaction between the assisted driving system and the driver. The driver depresses the accelerator pedal to enable the longitudinal override, and then releases the accelerator pedal to end the longitudinal override. Such a complete interaction process serves as a condition for the driver to trigger the man-machine shared autonomy mode. The duration and depth of the accelerator pedal depression determine the distance that the vehicle travels forward after entering the man-machine shared autonomy mode.

1.4) The current vehicle speed is low. The driver performs longitudinal override to increase the vehicle speed to a certain level. If this speed is higher, it is regarded that the driver's intention is to directly leave the intersection rather than to enter the man-machine shared autonomy mode. Here, the threshold separating the high speed and the low speed is v=30km/h. This threshold is obtained based on typical urban driving speeds and online calibration results from test drivers.

1.5) The current mode is the automatic driving mode or assisted driving mode, or is in a lateral override sate.

After entering the man-machine shared autonomy state, a longitudinal optimization problem is constructed based on safety, comfort, and a desired speed, and a desired value of smooth and comfortable deceleration under man-machine shared autonomy is applied to the longitudinal acceleration in the optimization problem, so that the generated longitudinal speed planning can realize comfortable braking under man-machine shared autonomy while ensuring safety.

2. Man-machine shared autonomy enable state → man-machine shared autonomy disable state. In the vehicle control method of the present application, in order for the subsequent driving functions to work properly, the man-machine shared autonomy condition should exist under certain conditions, i.e., when the vehicle has left the intersection area, the current traffic light is green allowing the vehicle to leave the intersection, or the driver has shown a clear intention to leave by increasing the vehicle speed through the longitudinal override. Exemplarily:

2.1) The vehicle is currently far from the intersection. The definition of "far from the intersection" is the opposite of the definition of "approaching the intersection" or "within the intersection" described above.

2.2) The current traffic light is not red. If the current light is not red, driving is required, and there is no need for man-machine shared autonomy with the driver to respond to the static elements of the intersection.

2.3) The vehicle is currently in a high-speed driving state. As described above, when the current vehicle speed is higher, it is considered that the driver intends to directly leave the intersection.

2.4) The vehicle is currently in a manual driving state. In the manual driving state, the assisted driving system cannot exert any control over the vehicle, and thus man-machine shared autonomy state cannot be activated.

The present application can handle the static elements such as the stop line and the waiting area for turning at the traffic light intersection in a relatively reliable manner and correct the assisted driving behaviors where other stopping positions near the intersection do not meet expectations.

In some embodiments of the present application, a computer device is provided, which includes a memory, a processor, and a computer program stored in the memory, wherein the processor executes the computer program to implement steps of the vehicle control method of any embodiment of the present application. Exemplarily, the computer device may be an intelligent driving controller.

In some embodiments of the present application, a computer-readable storage medium is provided, which stores a computer program or instruction therein, wherein the computer program or instruction, when executed by a processor, implements steps of the vehicle control method of any embodiment of the present application.

In some embodiments of the present application, a computer program product is provided, which includes a computer program or instruction, wherein the computer program or instruction, when executed by a processor, implements steps of the vehicle control method of any embodiment of the present application.

In some embodiments of the present application, a vehicle is provided, which is configured with a computer device of any embodiment of the present application.

In some embodiments of the present application, a device for controlling a vehicle passing through an intersection is provided, which includes: a braking control module for automatically controlling vehicle braking based on a stop line at the intersection detected by a vehicle sensing device; a shared autonomy module for determining whether a shared autonomy preset condition is satisfied, and initiating a man-machine shared autonomy mode in response to a driver operation of controlling vehicle driving if the shared autonomy preset condition is satisfied; the shared autonomy module is further configured to determine whether a non-shared autonomy preset condition is satisfied, and to exit the man-machine shared autonomy mode if the non-shared autonomy preset condition is satisfied.

Optionally, the shared autonomy preset condition includes simultaneously satisfying that the vehicle is located within a preset range of the intersection, a traffic light corresponding to a lane in which the vehicle is located is red, a current vehicle speed is less than a preset speed threshold, and a longitudinal override trigger signal is received.

Optionally, the non-shared autonomy preset condition includes satisfying at least one of the following: the vehicle is not located within a preset range of the intersection, a traffic light corresponding to a lane in which the vehicle is located is not red, a current vehicle speed is greater than a preset speed threshold, and the vehicle is in a manual driving state.

Optionally, the initiating a man-machine shared autonomy mode in response to a driver operation of controlling vehicle driving if the shared autonomy preset condition is satisfied includes:
initiating the man-machine shared autonomy mode if the shared autonomy preset condition is satisfied;
controlling a vehicle speed in response to a driver operation of controlling an accelerator pedal, while automatically controlling a direction of the vehicle based on a travel trajectory planned through automatic driving.

Optionally, the controlling a vehicle speed in response to a driver operation of controlling an accelerator pedal includes:
controlling the vehicle to accelerate or maintain a constant speed in response to a driver operation of depressing the accelerator pedal, and controlling the vehicle braking at a preset deceleration in response to a driver operation of releasing the accelerator pedal.

Optionally, the determining whether a shared autonomy preset condition is satisfied or the determining whether a non-shared autonomy preset condition is satisfied includes determining whether the vehicle is located within the preset range of the intersection:
when the vehicle has passed a stop line at an entrance of the intersection, determining whether a ratio of a distance traveled by the vehicle within the intersection to a total length of the intersection is less than a first threshold;
if the ratio is less than the first threshold, it is determined that the vehicle is located within the preset range of the intersection; if the ratio is equal to or greater than the first threshold, it is determined that the vehicle is not located within the preset range of the intersection;
when the vehicle has not passed the stop line at the entrance of the intersection, determining whether the distance from the vehicle to the stop line at the entrance of the intersection is less than a second threshold;
if the distance is less than the second threshold, it is determined that the vehicle is located within the preset range of the intersection; if the distance is equal to or greater than the second threshold, it is determined that the vehicle is not located within the preset range of the intersection.

Optionally, the shared autonomy module pre-configures a man-machine shared autonomy trigger state machine, which includes a man-machine shared autonomy enable state and a man-machine shared autonomy disable state;
the man-machine shared autonomy trigger state machine is controlled to switch to the man-machine shared autonomy enable state when the shared autonomy preset condition is satisfied;
the man-machine shared autonomy trigger state machine is controlled to switch to the man-machine shared autonomy disable state when the non-shared autonomy preset condition is satisfied.

Optionally, the stop line at the intersection includes a stop line at an entrance of the intersection and a stop line of a waiting area for turning within the intersection.

It should be noted that for each of the foregoing method embodiments, a series of actions are described as being combined for the purpose of simplifying the description. However, those skilled in the art should understand that the present application is not limited by the sequence of actions described, as certain steps may be performed in a different order or simultaneously according to the present application. Secondly, those skilled in the art should also understand that the embodiments described in the specification are all preferred embodiments, and the actions and modules involved are not necessarily essential to the present application. In the above embodiments, each embodiment emphasizes different aspects. For parts that are not described in detail in a certain embodiment, reference may be made to the relevant descriptions in other embodiments.

FIG. 6 is a schematic diagram of a hardware structure of a computer device for performing a vehicle control method provided in another embodiment of the present application. As shown in FIG. 6, the device includes one or more processors 610 and a memory 620. One processor 610 is shown as an example in FIG. 6.

The device for performing the vehicle control method may also include: an input unit 630 and an output unit 640.

The processor 610, the memory 620, the input unit 630, and the output unit 640 may be connected via a bus or other means. In FIG. 6, connection via a bus is shown as an example.

The memory 620, as a non-volatile computer-readable storage medium, may be used to store non-volatile software programs, non-volatile computer-executable programs, and modules, such as program instructions or modules corresponding to the vehicle control method in the embodiment of the present application. The processor 610 executes various functional applications and data processing of the server by running the non-volatile software programs, instructions, and modules stored in the memory 620, i.e., implementing the vehicle control method of the above-described method embodiment.

The memory 620 may include a program storage area and a data storage area. The program storage area may store an operating system, an application program required for at least one function. The data storage area may store data created based on the use of the vehicle control device, etc. Additionally, the memory 620 may include a high-speed random access memory, and may also include a non-volatile memory, such as at least one disk memory device, a flash memory device, or other non-volatile solid state memory device. In some embodiments, the memory 620 may optionally include memory that is remotely located relative to the processor 610, and such remote memory may be connected to the vehicle control device via a network. Examples of the above network include, but are not limited to, the Internet, an intranet, a local area network, a mobile communications network, and combinations thereof.

The input unit 630 may receive input numerical or character information, and generate signals related to driver settings and function control of the vehicle control device. The output unit 640 may include a display device such as a display screen.

The one or more modules are stored in the memory 620 and, when executed by the one or more processors 610, perform the vehicle control method in any of the method embodiments described above.

The above product can execute the method provided in the embodiments of the present application, with the corresponding functional modules and beneficial effects of executing the method. Technical details not exhaustively described in this embodiment can be found in the method provided in the embodiments of the present application.

The computer device in the embodiments of the present application exist in various forms, including, but not limited to:
(1) Intelligent driving controllers.
(2) Mobile communication devices: These devices are characterized by having mobile communication functions and are mainly aimed at providing voice and data communication. Such terminals include smartphones (e.g., iPhone), multimedia phones, feature phones, and low-end cell phones, etc.
(3) Ultra-mobile personal computer devices: These devices belong to the category of personal computers, with computing and processing functions, and generally with mobile Internet access capabilities. Such terminals include PDAs, MIDs and UMPC devices, such as iPads.
(4) Servers: Devices that provide computing services. The configuration of a server includes a processor, hard disk, memory, system bus, etc. The architecture of a server is similar to that of a general-purpose computer, but because of the need to provide high-reliability services, it has higher requirements in terms of processing capability, stability, reliability, security, scalability, manageability, and so on.
(5) Other electronic devices with data interaction functions.

The above-described embodiments of the device are merely illustrative. The units illustrated as separated components may or may not be physically separated. The components shown as units may or may not be physical units, and may be located either in one place or may be distributed across a plurality of network units. Some or all of the modules may be selected as needed to fulfill the purpose of the embodiments of the present application.

Through the above description of the embodiments, those skilled in the art can clearly understand that the embodiments can be implemented by means of software in conjunction with a general hardware platform, and alternatively, can be implemented through hardware alone. Based on such understanding, the above technical solution essentially or the part that contributes to the related technology can be embodied in the form of a software product. The computer software product may be stored in a computer-readable storage medium, such as a ROM or RAM, magnetic disks, optical discs, etc., and comprises a number of instructions to enable a computer device (which may be a personal computer, a server, or a network device, etc.) to perform the method of each embodiment or some parts of the embodiments.

Finally, it should be noted that, the above embodiments are only used to illustrate the technical solution of the present application, and are not intended to limit it. Although the present application has been described in detail with reference to the foregoing embodiments, a person of ordinary skill in the art should understand modifications may be made to the technical solutions described in the above embodiments, or equivalent substitutions may be made to certain technical features thereof. These modifications or substitutions do not depart from the essence and scope of the technical solutions of the embodiments of the present application.

## Claims

1. A method of controlling a vehicle passing through an intersection comprising:
automatically controlling vehicle braking based on a stop line at the intersection detected by a vehicle sensing device;
determining whether a shared autonomy preset condition is satisfied, and initiating a man-machine shared autonomy mode in response to a driver operation of controlling vehicle driving if the shared autonomy preset condition is satisfied; and
determining whether a non-shared autonomy preset condition is satisfied, and exiting the man-machine shared autonomy mode if the non-shared autonomy preset condition is satisfied.

2. The method according to claim 1, wherein the shared autonomy preset condition comprises: simultaneously satisfying that the vehicle is located within a preset range of the intersection, a traffic light corresponding to a lane in which the vehicle is located is red, a current vehicle speed is less than a preset speed threshold, and a longitudinal override trigger signal is received.

3. The method according to claim 1, wherein the non-shared autonomy preset condition comprises satisfying at least one of the following: the vehicle is not located within a preset range of the intersection, a traffic light corresponding to a lane in which the vehicle is located is not red, a current vehicle speed is greater than a preset speed threshold, and the vehicle is in a manual driving state.

4. The method according to claim 1, wherein the initiating a man-machine shared autonomy mode in response to a driver operation of controlling vehicle driving if the shared autonomy preset condition is satisfied comprises:
initiating the man-machine shared autonomy mode if the shared autonomy preset condition is satisfied;
controlling a vehicle speed in response to a driver operation of controlling an accelerator pedal, while automatically controlling a direction of the vehicle based on a travel trajectory planned through automatic driving.

5. The method according to claim 2, wherein the controlling a vehicle speed in response to a driver operation of controlling an accelerator pedal comprises:
controlling the vehicle to accelerate or maintain a constant speed in response to a driver operation of depressing the accelerator pedal, and controlling the vehicle braking at a preset deceleration in response to a driver operation of releasing the accelerator pedal.

6. The method according to claim 2 or 3, wherein the determining whether a shared autonomy preset condition is satisfied or the determining whether a non-shared autonomy preset condition is satisfied comprises following steps of determining whether the vehicle is located within the preset range of the intersection:
when the vehicle has passed a stop line at an entrance of the intersection, determining whether a ratio of a distance traveled by the vehicle within the intersection to a total length of the intersection is less than a first threshold;
if the ratio is less than the first threshold, it is determined that the vehicle is located within the preset range of the intersection; if the ratio is equal to or greater than the first threshold, it is determined that the vehicle is not located within the preset range of the intersection;
when the vehicle has not passed the stop line at the entrance of the intersection, determining whether the distance from the vehicle to the stop line at the entrance of the intersection is less than a second threshold;
if the distance is less than the second threshold, it is determined that the vehicle is located within the preset range of the intersection; if the distance is equal to or greater than the second threshold, it is determined that the vehicle is not located within the preset range of the intersection.

7. The method according to any one of claims 1-5, wherein a man-machine shared autonomy trigger state machine is pre-configured to include a man-machine shared autonomy enable state and a man-machine shared autonomy disable state;
the man-machine shared autonomy trigger state machine is controlled to switch to the man-machine shared autonomy enable state when the shared autonomy preset condition is satisfied;
the man-machine shared autonomy trigger state machine is controlled to switch to the man-machine shared autonomy disable state when the non-shared autonomy preset condition is satisfied.

8. The method according to any one of claims 1-5, wherein the stop line at the intersection comprises a stop line at an entrance of the intersection and a stop line of a waiting area for turning within the intersection.

9. A computer device comprising a memory, a processor and a computer program stored in the memory, **characterized in that** the processor executes the computer program to implement steps of the method of any one of claims 1-8.

10. A computer-readable storage medium storing a computer program or instruction therein, **characterized in that** the computer program or instruction, when executed by a processor, implements steps of the method of any one of claims 1-8.

11. A computer program product comprising a computer program or instruction, **characterized in that** the computer program or instruction, when executed by a processor, implements steps of the method of any one of claims 1-8.

12. A vehicle configured with the computer device of claim 9.

13. A device for controlling a vehicle passing through an intersection, comprising:
a braking control module for automatically controlling vehicle braking based on a stop line at the intersection detected by a vehicle sensing device;
a shared autonomy module for determining whether a shared autonomy preset condition is satisfied, and initiating a man-machine shared autonomy mode in response to a driver operation of controlling vehicle driving if the shared autonomy preset condition is satisfied;
the shared autonomy module is further configured to determine whether a non-shared autonomy preset condition is satisfied, and to exit the man-machine shared autonomy mode if the non-shared autonomy preset condition is satisfied.

14. The device according to claim 13, wherein the shared autonomy preset condition comprises: simultaneously satisfying that the vehicle is located within a preset range of the intersection, a traffic light corresponding to a lane in which the vehicle is located is red, a current vehicle speed is less than a preset speed threshold, and a longitudinal override trigger signal is received.

15. The device according to claim 13, wherein the non-shared autonomy preset condition comprises satisfying at least one of the following: the vehicle is not located within a preset range of the intersection, a traffic light corresponding to a lane in which the vehicle is located is not red, a current vehicle speed is greater than a preset speed threshold, and the vehicle is in a manual driving state.

16. The device according to claim 13, wherein the initiating a man-machine shared autonomy mode in response to a driver operation of controlling vehicle driving if the shared autonomy preset condition is satisfied comprises:
initiating the man-machine shared autonomy mode if the shared autonomy preset condition is satisfied;
controlling a vehicle speed in response to a driver operation of controlling an accelerator pedal, while automatically controlling a direction of the vehicle based on a travel trajectory planned through automatic driving.

17. The device according to claim 14, wherein the controlling a vehicle speed in response to a driver operation of controlling an accelerator pedal comprises:
controlling the vehicle to accelerate or maintain a constant speed in response to a driver operation of depressing the accelerator pedal, and controlling the vehicle braking at a preset deceleration in response to a driver operation of releasing the accelerator pedal.

18. The device according to claim 14 or 15, wherein the determining whether a shared autonomy preset condition is satisfied or the determining whether a non-shared autonomy preset condition is satisfied comprises determining whether the vehicle is located within the preset range of the intersection:
when the vehicle has passed a stop line at an entrance of the intersection, determining whether a ratio of a distance traveled by the vehicle within the intersection to a total length of the intersection is less than a first threshold;
if the ratio is less than the first threshold, it is determined that the vehicle is located within the preset range of the intersection; if the ratio is equal to or greater than the first threshold, it is determined that the vehicle is not located within the preset range of the intersection;
when the vehicle has not passed the stop line at the entrance of the intersection, determining whether the distance from the vehicle to the stop line at the entrance of the intersection is less than a second threshold;
if the distance is less than the second threshold, it is determined that the vehicle is located within the preset range of the intersection; if the distance is equal to or greater than the second threshold, it is determined that the vehicle is not located within the preset range of the intersection.

19. The device according to any one of claims 13-17, wherein the shared autonomy module pre-configures a man-machine shared autonomy trigger state machine, which includes a man-machine shared autonomy enable state and a man-machine shared autonomy disable state;
the man-machine shared autonomy trigger state machine is controlled to switch to the man-machine shared autonomy enable state when the shared autonomy preset condition is satisfied;
the man-machine shared autonomy trigger state machine is controlled to switch to the man-machine shared autonomy disable state when the non-shared autonomy preset condition is satisfied.

20. The device according to any one of claims 13-17, wherein the stop line at the intersection comprises a stop line at an entrance of the intersection and a stop line of a waiting area for turning within the intersection.
